# EUROPEAN PATENT SPECIFICATION

(11) **EP 1 042 380 B1**
(45) Date of publication and mention of the grant of the patent: **24.09.2003**
(21) Application number: 98963187.4
(22) Date of filing: 15.12.1998
(51) Int. Cl.: C08F 220/18, C09J 133/08

(54) **PRESSURE SENSITIVE ADHESIVE COMPOSITIONS**
DRUCKEMPFINDLICHE KLEBSTOFFZUSAMMENSETZUNGEN
COMPOSITIONS ADHESIVES AUTOCOLLANTES

(30) Priority: 17.12.1997 US 69904 P
(43) Date of publication of application: 11.10.2000
(73) Proprietor: UCB S.A., 1070 Bruxelles (BE)
(72) Inventor: GUO, Jong-Shing, Longmeadow, MA 01106 (US); OJUNGA-ANDREW, Meshach, Springfield, MA 01109 (US)
(74) Representative: Albrecht, Thomas, Dr.
(86) International application number: US9826591
(87) International publication number: WO99031153

(56) References cited:
- WO-A-93/08239
- WO-A-94/13751

## Description

This invention relates to pressure sensitive adhesive polymers and more particularly to such polymers which are ecologically friendly in not hindering downstream recovery of paper to which they are applied in use.

Pressure sensitive adhesives (PSAs) are inherently tacky at room temperature (about 25°C) and capable of readily bonding to a wide range of surfaces by application, at most, of light finger pressure. PSA's having a desirable balance of adhesive properties are in wide use in many applications.

WO 93/08239 relates to a water-dispersible, inherently tacky, pressure sensitive adhesive comprising a tacky emulsion polymer formed of from about 80 % to 90 % by weight of monomers comprising a major portion of at least alkyl acrylate containing from 4 to about 8 carbon atoms in the alkyl group and from about 20 % to 10 % by weight of a mixture of acrylic acid with at least an oleophilic unsaturated carboxylic acid, said emulsion polymer having a glass transition temperature of -15 to -50 °C and formed in the presence of anionic and nonionic surfactants. A sufficient amount of chain transfer agent is employed to provide an emulsion polymer which when coated on a repulpable paper substrate enables recovery of paper fibres substantially free of adhesive under conditions of TAPPI Useful Method 213 and/or 204, and resistant to loss of adhesive properties on exposure to high humidity.

WO 94/13751 relates to inherently tacky, polymeric, organic, solvent-insoluble, solvent-dispersible, elastomeric, pressure sensitive adhesive microspheres having pendant hydrophilic polymeric or oligomeric moieties having a degree of polymerisation greater than or equal to 2. The microspheres which are sterically stabilized can offer enhanced stability against coagulation caused by alkali, alkali salts, polyelectrolytes and repeated freeze/thaw cycles. This document also describes pressure-sensitive adhesives comprising these microspheres including aerosol spray PSAs, coated sheet materials prepared therefrom, and method of making the microspheres.

With the advent of public concern over ecology, a relatively recent performance characteristic imposed on successful PSAs requires that they be redispersible in alkaline solution when paper products containing the PSA are repulped during recycling. More specifically, during recycling, paper coated with or having trace levels of residual PSA left on the surface is conventionally slurried in hot, agitated alkaline solution to disintegrate the paper into its component fibers. PSA not dispersible in the solution agglomerates into globules called "stickies" in the art. Stickles plug screens used in repulping to increase manufacturing time and expense and they can eventually appear in the reformed paper as blotches and irregularities not receptive to ink. Water soluble adhesives are completely removed from the fibers during recycling but at the expense of other adhesive properties, particularly those required for the relatively recent popular peel and stick postage stamp and like applications. In peel and stick applications a laminate is provided of successive layers of release liner, PSA and the printed stamp. The stamp with adhered PSA on its underside is peeled from the release liner and then, without wetting, the PSA is directly applied with finger pressure to a paper substrate, such as an envelope or the like. Both the release liner and face-stock paper on which the stamp is printed (pre-consumer waste) and the stamped envelope (post-consumer waste) are desirably recycled and will contain residual PSA potentially insoluble in aqueous alkali thereby presenting the redispersibility problem just referred to.

A redispersible PSA functional particularly in peel and stick postage stamp applications is the subject of this invention.

### SUMMARY OF THE INVENTION

Accordingly, an object of this invention is to provide redispersible and recyclable PSA polymers having a broad balance of acceptable PSA performance properties.

Another object is to provide such polymers and compositions containing such polymers which are particularly useful in peel and stick postage stamp applications.

Other objects will in part be obvious and will in part appear from following description and claims.

These and other objects are accomplished by providing alkali-dispersible inherently tacky, pressure sensitive adhesive emulsion polymers of starting materials consisting essentially of: i) 55 to 90% by weight of one or more alkyl acrylates containing 4 to 8 carbon atoms in the alkyl group; ii) 4 to 20% by weight of a monomer mixture of acrylic acid and at least about 50% by weight, based on mixture weight, of acrylic acid oligomers; iii) 0 to 15% by weight of vinyl ester; iv) 0 to 30% by weight methyl acrylate; v) 0 to 5% by weight of copolymerizable surfactant; and vi) 0 to 5% by weight chain transfer agent. The emulsion polymer has a glass transition temperature between about minus 10 to about minus 60°C and, when present as a coating on a paper substrate, is sufficiently dispersible in alkali solution to enable recovery of paper fibers substantially free of adhesive polymer agglomerates as determined by passing the Redispersibility Test described herein. PSA compositions comprise the noted PSA emulsion polymer and one or more modifying agents likewise described later herein.

### DETAILED DESCRIPTION OF THE INVENTION

PSA emulsion polymers of the invention are prepared from starting materials which consist essentially of i) 55 to 90% by weight of one or more alkyl acrylates containing 4 to 8 carbon atoms in the alkyl group (e.g. n-butyl acrylate, 2- ethylhexyl acrylate, isoctyl acrylate and the like), ii) 4 to 20% by weight of a monomer mixture of acrylic acid and at least about 50% by weight, based on mixture weight, of acrylic acid oligomers; iii) 0 to 15% by weight of vinyl ester, e.g. vinyl acetate, vinyl butyrate, vinyl propionate, vinyl isobutyrate, vinyl valerate and the like; iv) 0 to 30%, preferably 20 to 30%, by weight methyl acrylate; v) 0 to 5% by weight copolymerizable surfactant (described hereafter) and vi) 0 to 5% by weight chain transfer agent (described hereafter).

Essential component ii) importantly promotes redispersibility (measured as described hereafter) without significantly adversely affecting other adhesive properties necessary particularly for the preferred peel and stick postage stamp applications. The preferred content of acrylic acid oligomers in component ii) is at least 70 wt.%, most preferably at least 80 wt.%. Component ii) is of the formula: 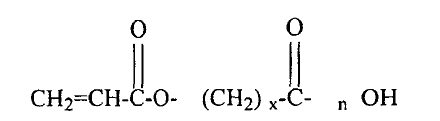 where x is an integer from 1 to 8, preferably 2 to 5 and n, connoting the mixture, is simultaneously 0 (i.e. acrylic acid) 1, 2 and 3. Component ii) is commercially available as Sipomer® β-CEA from Rhodia of Cranbury, N.J. This commercial mixture is a light yellow liquid of 98% active monomers where x = 2. Oligomer distribution in the mixture is:

| | wt.% |
|---|---|
| n = 0 | 20 |
| n = 1 | 40 |
| n = 2 & 3 | 40 |

Preferred PSA emulsion polymers contain 65 to 70% 2-ethylhexyl acrylate, 0 to 30% methyl acrylate, 4 to 12% of a monomers mixture of 20% acrylic acid and 80% of acrylic acid di, tri and tetra oligomers and 0.5 to 2% copolymerized surfactant, the percentages being by weight.

The glass transition temperature (Tg) of the PSA polymer as measured by Differential Scanning Calorimetry (DSC) is between about minus 10°C to about minus 60°C.

The PSA polymers are prepared by conventional emulsion polymerization using watersoluble or oil-soluble free radical or redox initiator systems in the presence of ionic and nonionic surfactants in amount effective to typically provide an average size of 0.1 to 0.8 microns to the emulsion particles which is usually from about 1 to about 5 wt.% of the total weight of aqueous emulsion.

Preferably a reactive surfactant at 0.5 to 2 wt.% based on monomers weight is used in the polymerization recipe which chemically attaches via a double bond in the surfactant to the PSA polymer backbone. This promotes emulsion stability and, since it is part of the polymer per se, survives drying in preparing the substrate coated with the PSA composition without migrating to the dried adhesive surface. Surfactant at the dry adhesive surface attracts moisture to the detriment of adhesive performance in high humidity conditions. A preferred polymerizable surfactant is sodium 1- allyloxy-2-hydroxy sulfonate commercially available as COPS 1 from Rhodia. Other usable reactive surfactants include alkyl allyl sulfosuccinate available as TREM®-LF40 from Henkel and alkylene polyalkoxy ammonium sulfate available as SAM-211 from BASF Corp.

Polymer concentration in the aqueous emulsion is between about 30 to 70, preferably about 40 to about 65% by weight to provide adequate viscosity for ease of coating and sufficient solids content for economy.

The emulsion PSA polymers are prepared preferably in the presence of chain transfer agent (CTA) in amount of about 0.05 to about 1.0% by weight of monomers. Preferred CTA's are n-dodecyl mercaptan and t-dodecyl mercaptan. Others include carbon tetrachloride and isooctylthioglycolate.

In formulating PSA compositions containing the emulsion PSA polymers various modifying agents are optionally but preferably used to impart or enhance a desired property without significantly adversely affecting adhesive performance. Modifying agents include thickening agents such as gums, cellulosics, water soluble polymers, associative thickeners and alkali swellable polymers. Representative useful commercial thickening agents and their suppliers are:

| | |
|---|---|
| Kelgin™, Kelzan™ | - Kelco |
| Natrosol® | - Aqualon Co. |
| Acrosol® | - Rohm and Haas Co. |
| Alcogum® | - Alco Chemicals |
| Nopco, DSX® | - Henkel Corp. |
| Polyox® | - Union Carbide Corp. |
| Collacral® | - BASF Corp. |

Optionally usable neutralizing agents to adjust polymer pH include alkali metal bases and amines such as ammonia, n-hexyl amine, monoethanol amine, 2-amino-methyl -propanol, hexamethylenediamine and the like. Other usable modifying agents include plasticizers, pigments, fillers, flow control agents, stabilizers and tackifying agents such as rosin esters and rosin acid hydrocarbons. Commercial tackifiers and their suppliers are:

| | |
|---|---|
| Aquatac® | - Arizona Chemicals |
| Penmatac™ | - Neville Alliance Inc. |
| Snowtack™ | - Akzo Nobel International Resins Group |
| Dresinol® | - Hercules Inc. |
| Tacolyn® | - " |
| Picconol® | - " |
| Foral® | - " |
| Staybelite® | " |

Properties of PSA polymers and formulated PSA compositions reported in Examples are measured according to the following procedures.
I ) PSA 180° Angle Dynamic Peel. Test laminates (with Mylar) containing the PSA prepared as described in Example 1C following are cut into one inch (2.5 cm) strips, 5.5 inch (14 cm) long and the strips conditioned at 21°C, 50% R.H. for 24 hours. The release paper is removed and the strips applied to a stainless steel plate (2 strips per plate ) with an automated 4.5 1b (2.0 Kg) Pressure Sensitive Tape Council (PSTC) rolldown apparatus, (12 in/min) once in both directions. A bond dwell time of 20 min. is allowed before peeling. Average Peel strength in Ibs/in is determined on an Instron Test Machine by peeling a strip from a plate at a 180° angle. In reporting results, the mode of peel failure is identified by either "A" meaning adhesive failure - i.e. adhesive entirely separates from the substrate or "C" meaning cohesive failure where it is left partially (e.g. half) on the substrate and partially (e.g. half) on the face stock or "T" meaning transfer failure where the adhesive is all transferred to the substrate. The greater the peel force the better the performance.
2) Shear Strength. Laminate samples (with Mylar) are prepared as noted above. 1/2 in. x 3.5 in. long strips are cut and bonded (0.25 in.² bond area) to the vertical edge of a flat stainless steel panel. The panel is placed on the PSTC rolldown apparatus and one double pass applied for each specimen. After the double pass, a dwell period of 30 min. is allowed and then a static load of 16 oz. (453 gm) is attached to the lower end of the strip and allowed to hang at 22°C to bond failure. The time (in hours) to failure is noted. A value greater than 2 hours is commercially acceptable.
3) Tack - Laminate Samples (with Mylar) are prepared as described in Example 1 C. 1" (2.5 cm) square specimens are cut and conditioned at 22°C, 55% RH for 16-30 hours. A Polyken Probe Tack Apparatus (Model #80-02-01) set at 1 cm/sec. test speed, 1 sec. dwell time and "peak" test mode is used. After removing the release liner the conditioned test specimens are placed on a flat surface with PSA facing up. An annular weight ring is lightly pushed down and rotated on the PSA. The weight ring and attached specimen is positioned in the Polyken apparatus "stage" and the apparatus activated to lower the stage vertically at the preset speed so as to bring the PSA into contact with a stationary probe tip positioned below the annular space of the ring. The stage continues linearly downward out of the way and the probe tip is allowed to dwell in contact with the PSA for the preset dwell time. The stage is then driven upward into contact with the annular ring forcing removal of the PSA from the tip of the probe. The force required to remove the adhesive from the tip is measured in gms. and reported as tack.
4) Permanence - This measures the degree of bonding of a peel and stick stamp adhered by the pressure sensitive adhesive composition to various substrates simulating potential envelope paper to which the stamp might likely be applied. Envelope paper substrates used are i) woven bond code #SWBWW2410 from Mac Isaac Co. - identified as B1 in the test results; ii) brown kraft #1162 from Staples Co. - ("K1") and iii) C0225 #28 Columbian kraft from Westvaco Co. ("K2"). I x 1 in. (2.5 x 2.5 cm) sections are cut from test laminates prepared as in Ex. 1 C (with paper). To simulate affixing a peel and stick postage stamp to a substrate the layered combination of PSA- face stock is manually peeled from the release liner layer and the side with the PSA pressed (with finger pressure) onto the paper envelope substrate and left in place for either 15 or 30 min. Specimens without aging are called "Initial" in the test results following; other specimens are placed in an environmental chamber for various periods at various temperature and humidity conditions. After exposure to such conditions, the aged specimens are left in place for 15 to 30 min. and the face stock layer (simulating the stamp) slowly manually removed from the paper substrate (simulating the envelope) and the simulated stamp face stock and paper substrate both visually checked for tear of paper fibers. The degree of fiber tear of both face stock and substrate to which it is applied is observed by naked eye without magnification and rated on a scale of 1 to 5 with 1 = no fiber tear, 2 = fiber pickup, 3 = <50% fiber tear, 4 = >50% fiber tear and 5 = 100% fiber tear. 2 to 5 is a commercially acceptable range. The test is conducted on specimens aged under the following conditions: a) initial - room temperature (25°C) no aging; b) high temperature + 70°C for 21 & 42 days; c) low temperature : minus 40°C for 21 & 42 days; d) high humidity : 38°C, 98.5% relative humidity for 42 days.
5) PSA Redispersibility. This evaluates dispersibility of PSA's in water under alkali conditions (i.e. at pH of 10) and simulates potential performance of the PSA polymer during recycle, recovery and reuse of the paper to which the PSA is adhered in securing a peel and stick postage stamp on an envelope. Dried PSA film at about 1 mil (0.0254 mm) thickness on release liner is formed as described for test laminates in Example 1 C but without the stamp paper face stock layer. The dried PSA film on the release liner is dipped in 1% Moplas Blue dye solution in acetone to coat the PSA with the dye solution. After drying, the dyed adhesive film is laminated to stamp paper face stock (see Example 1 C) and the release liner removed to provide a layered PSA - face stock laminate simulating a postage stamp. This simulated postage stamp is then manually affixed to a copy paper substrate to simulate a stamped paper envelope. The simulated stamped paper envelope is cut into 0.5 x 1 inch rectangular strips and 2.5 gms. of strip placed in a high shear Waring blender with 500 ml of water at pH 10 at 105°F (40.5°C). The blender is run at low speed for 10 min.; shear by the blender disintegrates the paper fibers and substantially releases PSA from the disintegrated fibers. The blender is stopped and the contents poured onto a 60- mesh sieve (250 microns opening). The PSA is considered redispersible (identified with "P" in the property table) when at least 50 wt.% of the particles pass through the screen and not redispersible ("F" in the table) otherwise. However, redispersibility according to this test can still be met where < 50 (e.g. 20) wt.% of inventive PSA polymers pass through the noted 60 mesh sieve.

The following Examples are exemplary of the invention wherein all parts and percentages are by weight unless otherwise indicated.

### EXAMPLES C1, C2, C3 AND 1,2,3

### A. Preparation of PSA Polymer

a) The following ingredients are added at ambient temperature to a tank equipped with a high speed agitator and stirred until a viscous gel forms:

| | Grams |
|---|---|
| Water | 133.3 |
| Polymerizable Surfactant¹ | 3.08 |
| Surfactant A² | 5.13 |
| Surfactant B³ | 2.39 |
| Surfactant C⁴ | 2.2 |
| 2-ethylhexyl acrylate | 335.9 |
| Methyl acrylate | 144.6 |
| Acrylic acid oligomers⁵ (CEA) | 32.3 |
| n-dodecyl mercaptan (CTA) | 0.2 |

| | |
|---|---|
| ¹Sodium 1-allyloxy-2-hydroxypropane sulfonate; Sipolymer® COPS 1 from Rhone Poulenc. | |
| ²30% water solution; Abex® EP-120 from Rhone Poulenc. | |
| ³75% solution; Aerosols OT 75 from Cytec Industries. | |
| ⁴70% water solution; Triton® x-305 from Union Carbide. | |
| ⁵Acrylic acid oligomer mixture; Sipomer® B-CEA from Rhone Poulenc. | |

b) The following ingredients are separately charged to a stirred polymerization reactor:

| | Grams |
|---|---|
| water | 333.4 |
| sodium bicarbonate | 1.13 |
| potassium persulfate | 2.56 |

and heated to 78°C. Then the viscous gel of a) above is charged continuously at constant flow rate over 200 minutes. During addition the temperature gradually increases to and is held at 82°C. After addition of a) the reactor contents is held at 82°C for 30 minutes and then cooled to 55°C. Then 0.51 g Triganox® A-W70 from Akzo Nobel, (70% solution of tert-butylhydroperoxide), 0.41 g Parolite® from Henkel Corp. (zinc sulfoxylate formaldehyde reducing agent) 3 gms defoamer (Balab 3056A from Witco) and 0.14 gm. bicocide (Kathon LX from Rohm & Haas) are charged and the contents held for 30 minutes at 55°C followed by cooling to room temperature. Measured glass transition temperature of the emulsion polymer is minus 35°C. Polymer composition (based on monomers charged) is as follows:

| | % | |
|---|---|---|
| EHA | MA | CEA |
| 65.5 | 28.2 | 6.3 |

### B. Preparation Of Formulated PSA Compositions

The following ingredients (pbw) are added with stirring to 100 pbw of the emulsion of polymer described in A. above:

| | Grams |
|---|---|
| water | 15.00 |
| neutralizing agent¹ | 0.50 |
| surfactant² | 0.25 |
| tackifier³ | 50.00 |

| | |
|---|---|
| ¹2-amino-methyl-1-propanol; AMP 95™ from Angus Chemical Co. | |
| ²sodium dioctyl sulfosuccinate; Aerosol OT 75 from Cytec Industries | |
| ³hydrocarbon rosin ester dispersion; Tacolyn® 1070 from Hercules Inc. | |

### C. Preparation of Laminate For Property Testing

The above formulated PSA composition is passed through a filter bag (about 75 micron opening). A 1 mil (0.025 mm) thick dry film of the composition is formed on a silicone treated (Darbert) release liner substrate by depositing the filtered emulsion on the silicone treated surface using a calibrated draw down bar followed by drying first at ambient temperature (about 20°C) (15 min.) and then with forced hot air at 90°C (5 min.). Mylar (polyester) film for peel adhesion, shear and tack testing and paper (pressure sensitive adhesive stamp paper from Westvaco Co., Richard VA conforming to U.S. Postal Services specification P-1238C, 85.8 to 97.7 gm/m² basis weight) for permanence and redispersibility testing is placed on various specimens of the dry film and then the three layers are pressed together in a laminator at room temperature to form laminates for measuring performance properties using the procedures described above. In commercial use, the paper layer of the laminate would be printed with ink to form the postage stamp (i.e. paper ink-printed on one side and coated with PSA on the other side) but such printing in the following tests was not done as unnecessary in evaluating PSA test performance.

### Evaluation of PSA Compositions

The following abbreviations are used in the examples:
- BA: = butyl acrylate
- EHA: = 2-ethylhexyl acrylate
- MA: = methyl acrylate
- AA: = acrylic acid
- MAA: = methacrylic acid
- MMA: = methyl methacrylate
- CEA: = acrylic acid oligomers mixture; Sipomer β-CEA from Rhone Poulenc
- Vac: = vinyl acetate
- TDM: = tert-dodecyl mercaptan
- DDM: = n-dodecyl mercaptan
- Redisp: = Redispersibility test
- P: = pass (Redispersibility test)

- F: = fail (Redispersibility test)
- PL20: = peel test after 20 minutes dwell time
- A: = adhesive mode of failure (peel test)
- C: = cohesive mode of failure (peel test)
- C1, C2, C3: = control examples - not according to invention

The content of monomers (% based on monomers charged) used in preparing the PSA polymers tested in the Examples is as follows:

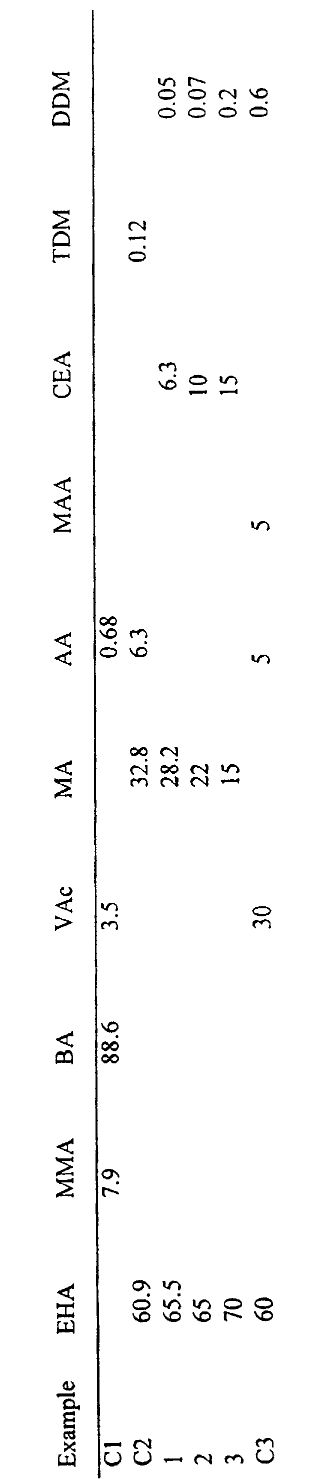

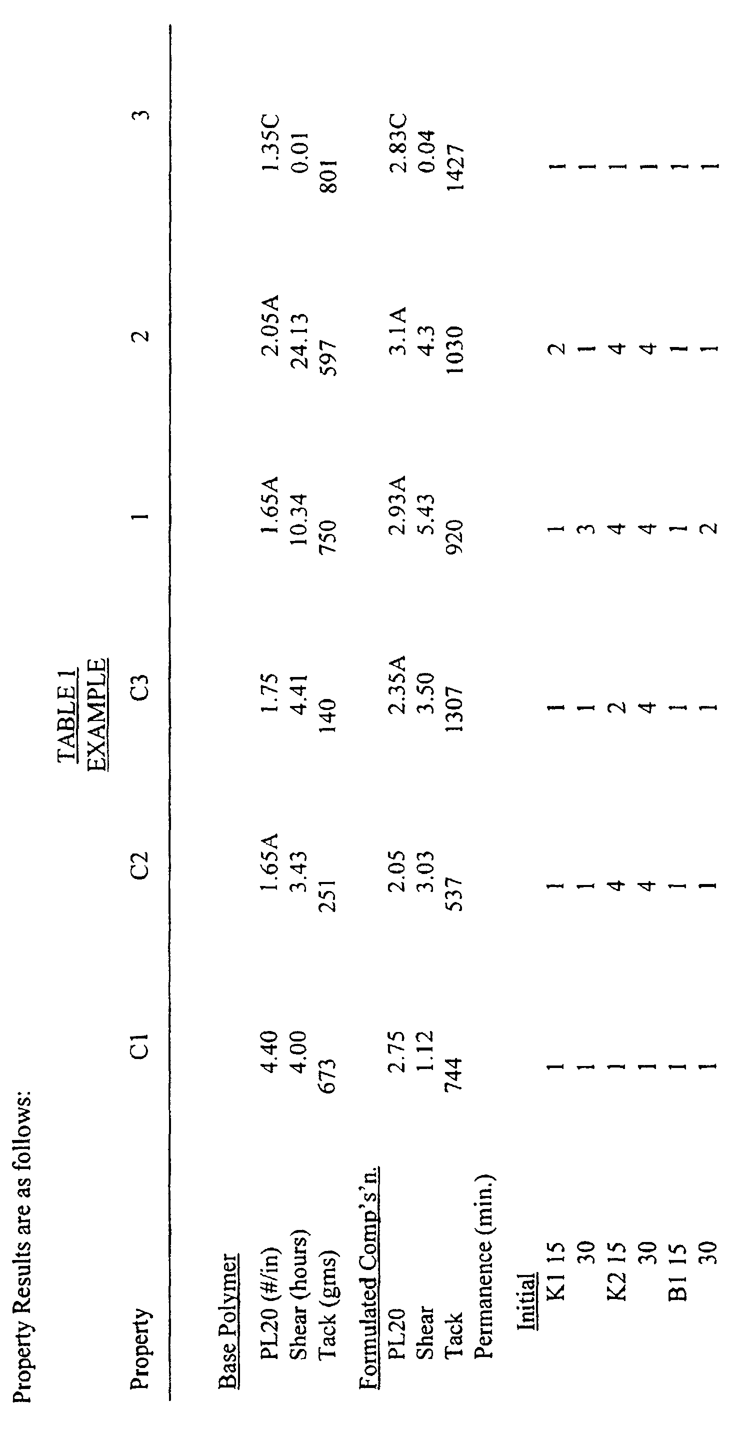

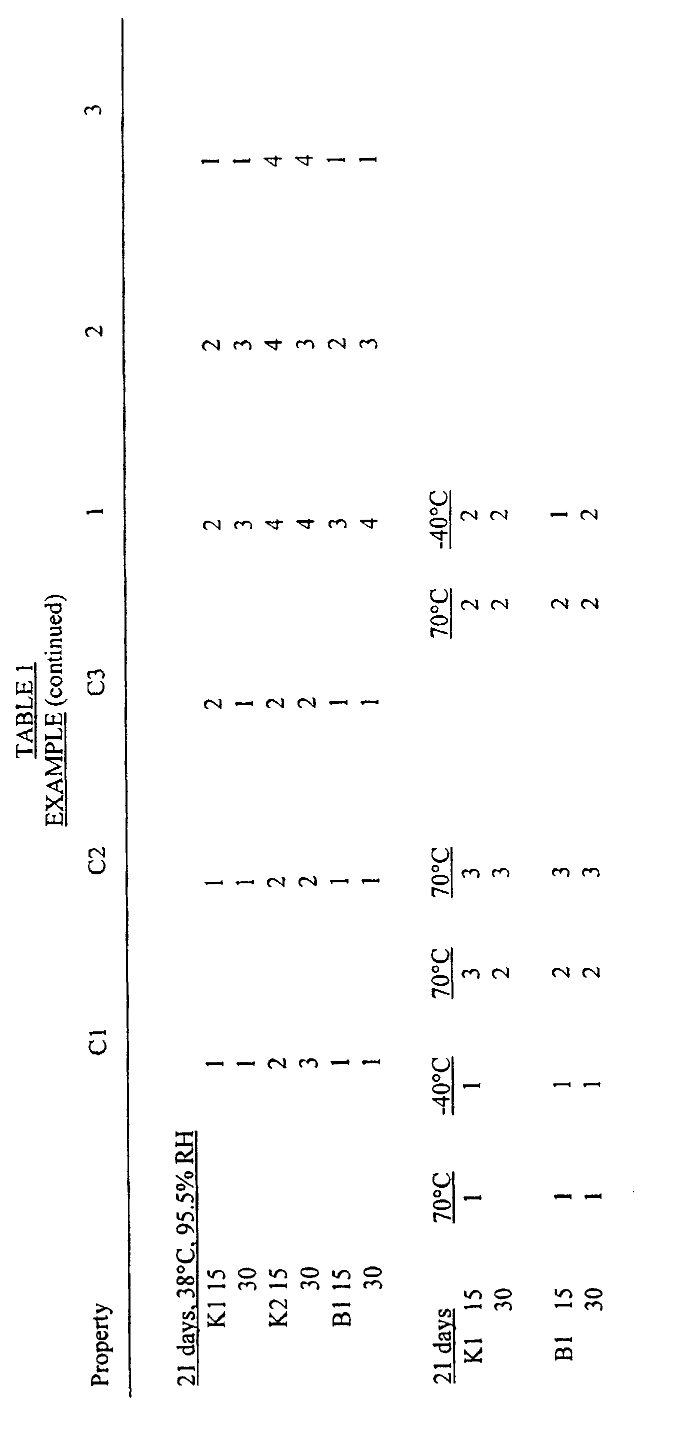

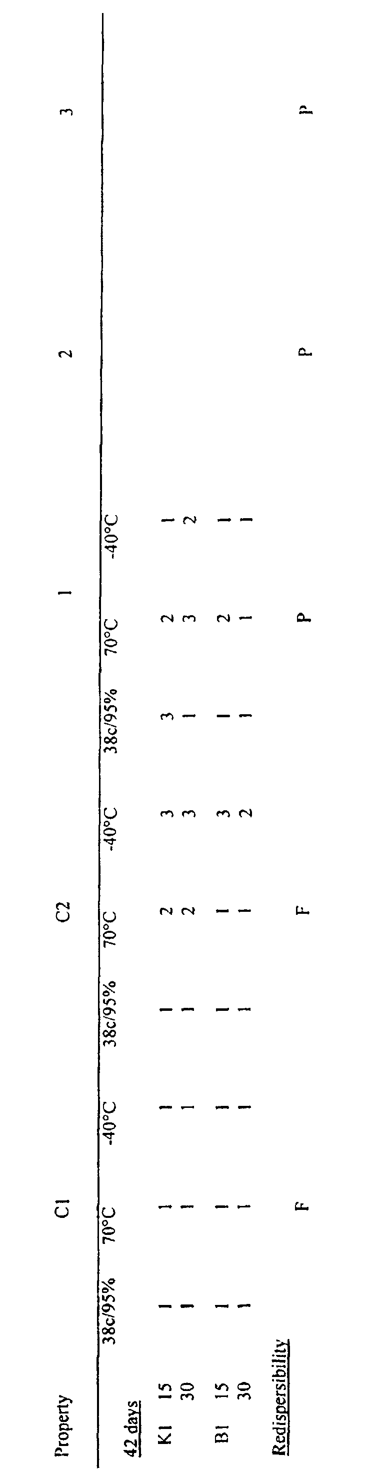

### EXAMPLE 4

### PSA RECYCLABILITY

PSA recyclability is examined in the following tests which evaluate actual performance of recycled PSA polymer in simulated paper samples called handsheets.
A) Lab Procedure - a simplified, smaller scale version of Pilot Plant Procedure B) following. A layered PSA-face stock laminate sample (dyed) simulating a postage stamp is prepared as described above in the PSA Redispersibility Test. 18 gms. of the dyed laminate sample is combined with 342 gms. copy paper and shredded (dry) to provide 360 gm. of mixture to be evaluated. This mixture is charged to a Model 450 H laboratory pulper (Adirondack) containing aqueous NaOH (pH10) @ 46°C to provide 14 wt.% of pulp called "consistency". Pulping (40 Hz setting on motor driving pulper rotor) is done for 8 min. and consistency is reduced to 1%. About 1 gal. of the 1% consistency pulp is removed and 15 handsheets prepared by TAPPI T-205 standard method. Dirt Count by image analysis (section 100 of USPS- P-xxxx Protocol - further described hereafter) is measured and the average for the 15 sheets reported in Table 2 following under the entry titled "initial pulped slurry". Then the 1% consistency pulp referred to above is passed through a Formax™ Flotation Drinking Cell (Adirondack Machine Corp., Glens Falls, NY) at 46°C for 10 min. The "accepts" stream (i.e. not "rejects" stream) is used to prepare handsheets using the procedure noted above and image analyses performed to provide the average Dirt Count value noted in Table 2 under the entry titled "Flotation cell-accepts". The remainder of the "accepts" stream from the noted flotation cell is passed at atmospheric pressure through a 0.15 mm. openings Valley Flat screen (Voith Sulzer), and the "accepts" stream (through screen) used to prepare handsheet and measure Dirt Count with the average result presented in Table 2 for the entry titled "0.15 mm flat screen-accepts". Example nos. in Table 2 (and 3) refer to the PSA compositions with the same nos. in Table 1 above.

**TABLE 2**

| Stage | Dirt Count (ppm) | |
|---|---|---|
| | Example | |
| | 1 | 2 |
| initial pulped slurry | 1836 | 149 |
| flotation cell-accepts | 954 | 24 |
| 0.15 mm Flat screen-accepts | 124 | 13 |

B) Pilot Plant Procedure - this vigorous evaluation measures dirt count (hereafter defined) after each stage of a six stage operation, each of which is described in detail in publicly available documents from the Forest Products Lab of the U.S. Dept. of Agriculture, section 90 of U.S.P.S. Pilot Scale Recycling Protocol of United States Postal Service Draft Specification "Paper, Stamp, Pressure Sensitive Recyclable Adhesive" (USPS-P-XXXX) dated May 1, 1998. At completion of each stage paper handsheets are prepared and dirt count analysis performed. The dirt count (in parts PSA per million parts of paper) values in following Table 3 represents the surface area of dispersed PSA in the handsheet per unit surface area of handsheet.

**TABLE 3**

| Stage Identity | Dirt Count (ppm) |
|---|---|
| | Example C1 |
| initial pulped slurry | 2796 |
| | |
| 0.3 mm opening pressure screen-accepts | 817 |
| | |
| 0.15 mm opening pressure screen-accepts | --- |
| | |
| forward cleaner (centrifuge) accepts | 1212 |
| | |
| flow through-accepts | 918.3 |
| | |
| LaMort flotation unit-accepts | 775 |

From the dirt count data above, PSAs of the invention (Examples 1 and 2) perform more effectively in this Recyclability test than control C1. Though the lab and pilot plant tests are somewhat different, the latter (more stages) is more effective in removing the PSA contaminants from the composition to be formed into paper handsheets so that if Exs. 1 and 2 PSA's were passed through the multiple stages of the Pilot Plant Procedure, the dirt count from the final stage would predictably be lower than that of C1 or, stated differently, if Ex. C1 PSA were evaluated according to the simplified "Lab Procedure", final dirt count would predictably be higher than that for C1 in the Pilot Plant Procedure.

Furthermore, in addition to the noted redispersibility and recyclability performance of the invention polymers, they likewise display a broad range of desirable adhesive properties exemplified above in Table 1.

The preceding description is for illustration and should not be taken as limiting. Various modifications and alterations will be readily suggested to persons skilled in the art. It is intended, therefore, that the foregoing be considered exemplary only and that the scope of the invention be ascertained from the following claims.

## Claims

1. Alkali-dispersible, inherently tacky, pressure sensitive adhesion emulsion polymers of starting materials consisting essentially of i) 55 to 90% by weight of one or more alkyl acrylates containing 4 to 8 carbon atoms in the alkyl group; ii) 4 to 20% by weight of a monomer mixture of acrylic acid and at least about 50% by weight, based on mixture weight, of acrylic acid oligomers; iii) 0 to 15% by weight of vinyl ester; iv) 0 to 30% by weight methyl acrylate; v) 0 to 5% by weight of copolymerizable surfactant; and vi) 0 to 5% by weight chain transfer agent.

2. The polymers of claim 1 wherein ii) contains at least 70 weight percent oligomers, based on mixture weight.

3. The polymers of claim 2 wherein iv) contains 20 to 30% methyl acrylate.

4. The polymers of claim 3 wherein v) contains 0.2 to 3 weight %, based on monomers weight.

5. The polymers of claim 4 wherein vi) contains about 0.05 to about 1.0 weight % chain transfer agent, based on monomers weight.

## Patentansprüche

1. Alkali-dispergierbare, inhärent klebrige, druckempfindliche Klebeemulsionspolymere der Ausgangsmaterialien bestehend im Wesentlichen aus i) 55 bis 90 Gew.-% eines oder mehrerer Alkylacrylate enthaltend 4 bis 8 Kohlenstoffatome in der Alkylgruppe; ii) 4 bis 20 Gew.-% eines Monomergemisches aus Acrylsäure und mindestens etwa 50 Gew.-%, bezogen auf das Gewicht des Gemisches, Acrylsäureoligomere; iii) 0 bis 15 Gew.-% Vinylester; iv) 0 bis 30 Gew.-% Methylacrylat; v) 0 bis 5 Gew.-% copolymerisierbarem Tensid; und vi) 0 bis 5 Gew.-% Kettenübertragungsmittel.

2. Polymere nach Anspruch 1, wobei ii) wenigstens 70 Gew.-% Oligomere, bezogen auf das Gewicht des Gemisches, enthält.

3. Polymere nach Anspruch 2, wobei iv) 20 bis 30 Gew.-% Methylacrylat enthält.

4. Polymere nach Anspruch 3, wobei v) 0.2 bis 3 Gew.-%, bezogen auf das Gewicht der Monomeren, enthält.

5. Polymere nach Anspruch 4, worin vi) etwa 0.05 bis etwa 1.0 Gew.-% Kettenübertragungsmittel, bezogen auf das Gewicht der Monomeren, enthält.

## Revendications

1. Polymères en émulsion adhésifs autocollants, dispersibles dans une solution alcaline et intrinsèquement gluants, de matériaux de départ consistant essentiellement en i) de 55 à 90 % en poids d'un ou de plusieurs acrylates d'alkyle contenant de 4 à 8 atomes de carbone dans le groupe alkyle ; ii) de 4 à 20% en poids d'un mélange de monomères d'acide acrylique et d'au moins environ 50 % en poids, rapporté au poids du mélange, d'oligomères d'acide acrylique ; iii) de 0 à 15 % en poids d'ester de vinyle ; iv) de 0 à 30 % en poids d'acrylate de méthyle ; v) de 0 à 5 % en poids de surfactant copolymérisable ; et vi) de 0 à 5 % en poids d'agent de transfert de chaîne.

2. Polymères selon la revendication 1, lesquels ii) contiennent au moins 70 % en poids d'oligomères, rapporté au poids d'un mélange.

3. Polymères selon la revendication 2, lesquels iv) contiennent de 20 à 30 % d'acrylate de méthyle.

4. Polymères selon la revendication 3, lesquels v) contiennent de 0,2 à 3 % en poids, rapporté au poids des monomères.

5. Polymères selon la revendication 4, lesquels vi) contiennent d'environ 0,05 à environ 1,0 % en poids d'agent de transfert de chaîne, rapporté au poids des monomères.
